# EUROPEAN PATENT APPLICATION

(11) **EP 4 844 345 A1**
(43) Date of publication of application: **25.11.2026**
(21) Application number: 25178381.7
(22) Date of filing: 22.05.2025
(51) Int. Cl.: G01D 18/00

(54) **REFERENCE-FREE CALIBRATION FOR POSITION SENSORS**

(71) Applicant: Melexis Technologies SA, 2022 Bevaix (CH)
(72) Inventor: LUGANI, Lorenzo, Bevaix (CH)
(74) Representative: Winger

(57) **Abstract**

A calibration device is provided for calibrating an angular position sensor with two periodic position encoders of different periodicities. The device comprises a connection interface to receive a first angle signal from the first encoder and a second angle signal from the second encoder. A signal processing circuit computes, at multiple angular positions, a first angle using the first signal for measurement and the second signal for disambiguation. It also computes a second angle by reversing the roles. At each angular position, the difference between the two computed angles is determined. From these differences, a sinusoidal error function with one-turn periodicity is extracted. A calibration profile is then derived from this function. The profile can be used to correct measurement errors caused by mechanical misalignment. The invention enables reference-free calibration of angular position sensors during system integration or operation.

## Description

### Field of the invention

The invention relates to the field of angular position sensor systems, devices and sensors. More specifically, it relates to a method and a device for calibrating angular position sensor systems without requiring an external reference.

### Background of the invention

Rotary position sensor systems (also named angular position sensor systems) are essential components in systems that require accurate tracking of the angular position of a rotating object. They are widely used in robotic, automotive, industrial, and consumer applications, where compact form factors, robustness, and precise absolute angle measurement over a full rotation are often required.

Various sensor technologies can be used to detect angular position, including optical, magnetic, capacitive, and inductive sensors. These systems generally comprise a rotatable target to be fixed to the rotating object, whose angular position is detectable by a sensor device via at least one angular position sensor generating an angle signal whose value changes with the rotation of the rotating object.

Some of these sensor devices have a single angular position sensor unambiguously sensing the angular position of the rotatable target within an operational angular range (unambiguous measurement range), the range being a portion (e.g. for a robotic joint) up to a full turn of the rotatable target. Other devices, for extending the unambiguous measurement range and/or for providing more accurate angular resolution, have two or more angular position sensors, each providing accurate angular positions within a different-sized portion of a full turn, i.e. in a cyclic way over a full turn of the rotatable target (therefore also called cyclic or periodic angular position sensor), so as the angular position signals with different periodicities can be combined in a Vernier configuration. This approach enables fine-resolution absolute angle measurements over a full turn by exploiting the unambiguous relationship of the angular period signals provided by sensors having different periodicities to unwrap the angle.

However, one of the key challenges in deploying fine-resolution position sensor system is the sensitivity to assembly tolerances. Mechanical misalignments between the sensor device and the rotatable target fixed on the rotating object whose angular position has to be measured - such as off-axis displacement, tilt, wobble, or skew - can introduce angle errors that can interfere up to make the measurement useless for some applications. To compensate for these assembly-related errors, a calibration step is generally executed after the assembly of the angular position sensor system within the system where the rotating object is operating. Conventionally, such calibration relies on providing an external high-accuracy angular reference, that should be provisionally assembled within the system during the calibration process, adding cost, complexity, and time to the process for putting the angular position sensor system into operation.

Thus, in known systems, calibration typically involves comparing, for a plurality of angular position of the rotating object, the angle measured by the position sensor device to such external angular reference for computing correction values to be used to correct the position sensing system's output during normal measurement operations. However, this approach is not suitable for calibrating angular position sensor systems where space, cost, or integration constraints prevent the use of external references.

There is thus a need for a calibration that can compensate for assembly misalignment-induced errors without requiring external angular references.

### Summary of the invention

It is an object of embodiments of the present invention to provide a calibration device and a calibration method that can correct, or at least attenuate, for assembly-related misalignment errors without requiring an external angular reference.

The above objective is accomplished by a method and a device according to the present invention.

In a first aspect, embodiments of the present invention relate to a calibration device for calibrating an angular position sensor device for measuring the absolute angular position of a rotatable target over at least a portion of one full turn about a rotation axis.

The angular position sensor device comprises at least a first and a second periodic angular position encoder, each configured to sense an angular position of a rotatable target arranged to rotate about the rotation axis, wherein the periodicities are different from each other.

The calibration device comprises a connecting arrangement for acquiring a first periodic angle signal provided by the first periodic angular position encoder and a second periodic angle signal provided by the second periodic angular position encoder.

In embodiments of the present invention the calibration device, moreover, comprises signal processing unit configured for computing, for each of a plurality of angular positions of the rotatable target, a first period-disambiguated angle using the first periodic angle signal for angular measurement, and using transitions of the first periodic signal and/or the second periodic angle signal for resolving periodic ambiguity of the first periodic angle signal.

A 'period-disambiguated angle' as used herein refers to an angle computed from a periodic signal whose cyclic ambiguity has been resolved using another periodic signal of different periodicity, for example using a Vernier-type approach.

In embodiments of the present invention signal processing unit is configured for computing, for each of the same plurality of angular positions, a second period-disambiguated angle using the second periodic angle signal for angular measurement, and using transitions of the second periodic signal and/or the first periodic angle signal for resolving periodic ambiguity of the second periodic angle signal.

In embodiments of the present invention signal processing unit is configured for computing, for each of the plurality of angular positions, a difference between the first and second period-disambiguated angle.

In embodiments of the present invention signal processing unit is configured for extracting, from the differences computed at the plurality of angular positions, a sinusoidal function having a period corresponding to one turn of the rotatable target.

In embodiments of the present invention signal processing unit is configured for defining a calibration profile based on the extrapolated sinusoidal function.

It is an advantage of embodiments of the present invention that misalignment-induced errors can be corrected without requiring an external angular reference. It is an advantage of embodiments of the present invention that the accuracy of the absolute angular position measurement can be improved.

In embodiments of the present invention the signal processing unit is configured to use, at each of the plurality of angular positions, either the first of the second period-disambiguated angle to represent the angular position in extracting the sinusoidal function.

In embodiments of the present invention, the signal processing unit is configured to extract the sinusoidal profile by performing a harmonic analysis of the differences between the first and second period-disambiguated angles.

It is an advantage of embodiments of the present invention that systematic error patterns related to mechanical misalignment can be effectively identified and corrected.

In embodiments of the present invention, the harmonic analysis comprises determining a first harmonic component over 360 degrees using a Fourier transform or a wavelet transform and/or fitting and/or matching the differences with a given sinusoidal function or model, preferably by fitting and/or matching the differences with one of a plurality of predefined different sinusoidal functions or models. It is an advantage of embodiments of the present invention that a mathematically precise and computationally efficient method is used for extracting the dominant error component.

In embodiments of the present invention the signal processing unit is configured to weight the extrapolated sinusoidal function by a weighting parameter for defining the calibration profile.

In embodiments of the present invention, the calibration profile is stored in a memory of the signal processing unit, or in the memory of an angular position device or in the memory of an angular position sensor system. Hence, it can be applied during operation to correct the measured angular position. In embodiments of the present invention one or more calibration function parameters and/or calibration dataset may be stored.

In embodiments of the present invention the calibration device is configured for providing the defined calibration profile, preferably in form of one or more calibration function parameters and/or calibration dataset, to an angular position sensor system, to an angular position device and/or to an external device being connectable to the angular position sensor device.

It is an advantage of embodiments of the present invention that calibration results are preserved and available during runtime without requiring continuous recalibration.

In embodiments of the present invention the signal processing unit is configured to extract the sinusoidal function by assigning the first or the second period-disambiguated angle at each of said plurality of angular positions.

In embodiments of the present invention, the signal processing unit applies the correction by subtracting the calibration profile from the computed first angle.

It is an advantage of embodiments of the present invention that correction can be implemented with minimal processing overhead.

Embodiments of the present invention may also relate to an angular position sensor system for measuring an absolute angular position of a rotating object over at least a portion of one full turn about a rotation axis of the rotating object.

The angular position sensor comprises:
- a rotatable target fixable to a rotatable object;
- a first and a second periodic angular position encoder configured to sense an angular position of the rotatable target, and
- a calibration device in accordance with embodiments of the present invention;

In embodiments of the present invention the angular position sensor system is selectively configured to:
- operate in a calibration mode, wherein the calibration device is configured to acquire the first periodic angle signal and the second periodic angle signal so as to define a calibration profile, and to
- operate in a normal measurement mode, wherein the angular position sensor system is configured to determine an absolute angular position based on periodic angle signals provided by the first and the second periodic angular position encoders and according to the defined calibration profile.

In embodiments of the present invention the angular position system is, in the normal measurement mode, configured to correct said periodic angle signals and/or an angle calculated from said periodic angle signals, according to the defined calibration profile.

Where in embodiments of the present invention reference is made to "according to the defined calibration profile", reference is made to using a correction curve, function, or dataset-previously derived during a calibration procedure based on angle signal differences between periodic position sensors-to compensate for systematic measurement errors, such as those caused by mechanical misalignments. This may involve subtracting the calibration curve from the calculated angle or adjusting the periodic angle signals before calculating the final absolute angle. The calibration profile may be applied in real time during normal operation and may be stored in a memory accessible to the position sensing system.

In embodiments of the present invention, the first periodic position sensor has a higher number of periods per turn than the second periodic position sensor and is used as the primary sensor during normal operation.

It is an advantage of embodiments of the present invention that the high-resolution signal is prioritized for fine angle tracking.

In embodiments of the present invention, the periodic position sensors are inductive sensors.

It is an advantage of embodiments of the present invention that the system benefits from a robust and contactless sensing technology that is suitable for use in harsh environments.

In embodiments of the present invention, the periodic position sensors and the signal processing unit are integrated in a single semiconductor package.

It is an advantage of embodiments of the present invention that the solution is compact, cost-effective, and easy to integrate into end-user systems.

In embodiments of the present invention, the rotatable target comprises a conductive or ferromagnetic structure configured to modulate the signals received by the periodic position sensors.

It is an advantage of embodiments of the present invention that signal strength and accuracy are enhanced by suitable coupling with the sensing elements.

In embodiments of the present invention, at least one of the periodic position sensors comprises a transmit coil configured to generate an excitation field and at least one receive coil having a winding pattern that defines a periodic spatial response corresponding to the periodicity of the angle signal.

It is an advantage of embodiments of the present invention that the device can be implemented using a wide variety of inductive sensor topologies.

In embodiments of the present invention the rotatable target is fixed to an end, or around an elongated portion, of the rotatable object.

In embodiments of the present invention the first and the second periodic position encoders are optical, magnetic, inductive, and/or capacitive periodic angular position encoders.

In a second aspect, embodiments of the present invention relate to a method for calibrating an angular position sensor device configured to measure the absolute angular position of a rotatable target over at least one full turn using at least two periodic position sensors having different periodicities.

The angular position sensor device comprises at least a first and a second periodic angular position encoder configured to sense an angular position of a same rotatable target with different periodicities.

The method comprises:
- assembling the rotatable target to a rotatable object whose angular position has to be measured;
- obtaining, for each of a plurality of angular positions of the rotatable target, a first period-disambiguated angle signal by combining a first angle signal from the first periodic angular position encoder and a second angle signal from the second angular periodic position encoder, wherein the first angle signal is used for angular measurement, and wherein transitions of the first periodic signal and/or the second angle signal is used for resolving periodic ambiguity of the first angle signal;
- obtaining, for each of the same plurality of angular positions, a second period-disambiguated angle signal by using the second angle signal for angular measurement, and using transitions of the second periodic signal and/or the first angle signal for resolving periodic ambiguity of the second angle signal;
- computing, for each of the plurality of angular positions, a difference between the first and second period-disambiguated angle;
- from the differences computed at the plurality of angular positions, extracting a sinusoidal function having a period corresponding to one turn of the rotatable target;
- defining a calibration profile based on the extrapolated sinusoidal function, preferably the calibration profile comprising a calibration parameter and/or calibration dataset.

In embodiments of the present invention the step of assembling comprises:
- mounting the rotatable target at an end, or around an elongated portion, of the rotatable object, and,
- mounting of periodic angular position sensors of the first and the second encoders in front of one or more scales of the first and the second encoders, said one or more scales being provided on the rotatable target, so as to sense an angular position of the rotatable target.

It is an advantage of embodiments of the present invention that the calibration can be performed internally, without requiring additional hardware or external reference equipment.

In embodiments of the present invention, extracting the calibration profile comprises performing a harmonic analysis of the differences between the first and second disambiguated angle signals.

It is an advantage of embodiments of the present invention that well-established signal processing techniques can be used to isolate systematic misalignment errors.

In embodiments of the present invention, the harmonic analysis comprises determining the first mechanical harmonic component over a full turn using a Fourier transform or a Wavelet transformation. It is an advantage of embodiments of the present invention that the most relevant error term can be efficiently extracted and corrected.

In embodiments of the present invention, applying the calibration profile comprises subtracting the calibration profile from the first set of angles during normal operation to obtain a corrected absolute angular position. It is an advantage of embodiments of the present invention that the correction step is computationally simple and suitable for real-time application.

In embodiments of the present invention extracting the sinusoidal function comprises fitting and/or matching the differences with a given sinusoidal function or model, preferably by fitting and/or matching the differences with one of a plurality of predefined different sinusoidal functions or models.

In embodiments of the present invention extracting the sinusoidal function comprises assigning, at each of the plurality of angular positions, either the first or the second period-disambiguated angle signals to represent the angular position used in the extraction of the sinusoidal function.

In embodiments of the present invention defining a calibration profile comprises weighting the extrapolated sinusoidal function by a weighting parameter.
In embodiments of the present invention the step of obtaining a first and a second period-disambiguated angle comprises rotating the rotating object from an initial angular position to a final angular position. In embodiments of the present invention the rotatable object is rotated over a full turn.

In embodiments of the present invention the method comprises storing (245) the calibration profile, preferably in form of one or more calibration function parameters and/or calibration dataset, in a memory of the position sensor system and/or of an external device connectable to the position sensor system.

In embodiments of the present invention the method comprises providing the defined calibration profile, preferably in form of one or more calibration function parameters and/or calibration dataset, to the angular position sensor device, an angular position device and/or to an external device being connectable to the angular position sensor device.

In embodiments of the present invention, the periodicities of the first and second periodic position sensors have no common divisor. It is an advantage of embodiments of the present invention that the resulting angle provides full-turn unambiguous coverage with improved resolution.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows a schematic block diagram of an angular position sensor system being assembled with a rotatable object, wherein the system comprises a position sensing device with two periodic position sensors connected to a calibration device having a signal processing unit, in accordance with embodiments of the present invention.
FIGS. 2a-c show assembly strategies such as through-shaft-sensor and side-of-shaft-sensor arrangement, as well as a through-shaft-target arrangement
FIGS. 3a-d show typical mechanical misalignments arising from assembling the angular position system to the rotatable object, such as Off-axis (FIG.3a), Tilt (FIG.3b), Wobble (FIG.3c) and Skew (FIG.3d) misalignments.
FIG. 4 shows an angular position sensor system with two periodic angular position encoders, which can comprise, or can be used with, the calibration device in accordance with embodiments of the present invention or can be calibrated using a method in accordance with embodiments of the present invention.
FIG. 5 shows an exemplarily comparison of periodicities of two periodic angular position encoders by plotting the measurement angle in electrical degrees as a function of the reference angle, which are obtained in a method or device in accordance with embodiments of the present invention.
FIG. 6 exemplarily shows a Vernier-based measured absolute angle obtained using an angle signal provided by a 32-period encoder as primary signal and an angle signal provided by a 5-period encoder as secondary signal, in a method or device in accordance with embodiments of the present invention.
FIG. 7 shows an exemplary error signal resulting from the use of an angular position sensor system with two periodic angular position encoders without assembly's alignment errors, which are present in an intermediary step in a method or device in accordance with embodiments of the present invention.
FIG. 8 shows an exemplary comparison between system's error signals and assembly-related misalignment errors.
FIGS. 9 and 10 graphically illustrate a computation of two periodic-disambiguated angle signals, the first one based on the angle signal provided by the first periodic encoder, the second one based on the angle signal provided by the second periodic encoder, both plotted according to the first periodic-disambiguated angle signal used as internal reference angle, in accordance with embodiments of the present invention.
FIG. 11 shows an exemplary difference (delta) between the two periodic-disambiguated angle signals, across a full turn, plotted according to first Vernier angle, as obtainable using a device or a method in accordance with embodiments of the present invention.
FIG. 12 shows the extracted delta of FIG. 9 along with its first mechanical harmonic component, plotted according to first Vernier angle, as obtained using a device or a method in accordance with embodiments of the present invention.
FIG. 13 shows the original angle measurement affected by misalignment-related errors and the corrected angle after applying the calibration profile, as obtained using a device or a method in accordance with embodiments of the present invention.
FIG. 14 shows a flow chart of a calibration method, in accordance with embodiments of the present invention.

Any reference signs in the claims shall not be construed as limiting the scope.
In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to a "position sensor", reference is made to a sensing element that is configured to generate an angle-dependent electrical signal in response to the relative angular position of a rotatable target. The position sensor typically includes one or more transmit elements (e.g., coils, emitters) and one or more receive elements (e.g., coils, detectors, electrodes), which interact with the rotatable target to produce a signal that varies periodically with rotation. Examples include inductive, capacitive, optical, or magnetic sensors.

Where in embodiments of the present invention reference is made to a "position sensor device", reference is made to an assembly that comprises one or more position sensors and optionally additional components such as a signal processing unit, mounting structures, or communication interfaces. The position sensor device is typically arranged such that the sensing elements are located in front of or around the rotatable target, which is mechanically fixed to a rotatable object. The device may be designed for axial or radial sensing and may include both analog and digital electronics for signal acquisition, angle computation, calibration, and communication.

Where in embodiments of the present invention reference is made to a "position encoder", reference is made to the combination of a position sensor and a cooperating structure on the rotatable target, such as a patterned disc, a magnetic track, or a conductive feature, that modulates the signal received by the position sensor. The position encoder defines the periodicity and spatial pattern of the measured signal and enables detection of the angular position based on this interaction. In particular, a periodic angular position encoder refers to such a configuration in which the output signal repeats cyclically over a portion of a full rotation.

Where in embodiments of the present invention reference is made to "absolute angular position" reference is made to an unambiguous measure of the angular orientation of the rotatable target relative to the angular position sensor device, notably according to a reference angle (e.g. origin angle, zero angle), valid over at least a portion of one full revolution. Examples include a numeric angle measurement ranging from 0° to 360° or from 0 to 2π radians, or any extended range that covers more than one full turn when needed.

Where in embodiments of the present invention reference is made to "rotatable target (110)" reference is made to any physical structure being designed, arranged or configured to rotate around a defined axis whose angular position is measurable by a sensor arrangement. Moreover, the rotatable target is typically configured to be (permanently or provisionally) attachable to the rotatable object whose angular position has to be measured, such as a shaft, a rotatable joint, a rotor, or any other rotatable mechanical component in motors or actuators, turbines, or similar rotatable objects.

Where in embodiments of the present invention reference is made to "rotation axis" reference is made to the central line about which the target revolves. Examples include the geometrical axis of a motor shaft, a wheel axle, or an industrial spindle.

Where in embodiments of the present invention reference is made to "periodic position sensor" reference is made to any sensor that produces a repetitive output signal pattern over one full revolution of the rotatable target. This term can be substituted with "sensor that provides a repetitive angle-dependent signal." Examples include inductive sensors, magnetic resolvers, optical encoders, or capacitive encoders that generate repeated signal cycles per revolution.

Where in embodiments of the present invention reference is made to "axial measurement of the rotatable target" reference is made to a sensing approach in which the sensor's measurement axis aligns with the rotation axis, typically detecting changes in the target's characteristics along or around that axis. This term can be substituted with "axially oriented angle detection of the target." Examples include sensors placed above the end of a shaft or rotor, measuring rotation through inductive, magnetic, optical, or capacitive interactions aligned with the rotation axis.

Where in embodiments of the present invention reference is made to "angle signal" reference is made to an electrical or digital output representing the measured angular position of the rotatable target, typically varying in a periodic manner over one full turn.

Where in embodiments of the present invention reference is made to the term "signal processing unit" or "processing unit" reference is made to an electronic or computational component that receives the angle signals, performs calculations or processing steps, and outputs an angular measurement such as a corrected or refined angular measurement. The signal processing unit may for example be a microcontroller with dedicated software, a digital signal processor (DSP), an application-specific integrated circuit (ASIC), or a programmable logic device.

Where in embodiments of the present invention reference is made to the phrase "determine a difference between the first and second angles at a plurality of angular positions" reference is made to calculating the numerical subtraction between two computed angles across multiple discrete points or positions over a full rotation.

Where in embodiments of the present invention reference is made to the term "harmonic analysis" reference is made to the mathematical process of decomposing a periodic signal (in this case, the difference between two sensor angles) into its constituent sinusoidal components. Examples include a discrete Fourier transform (DFT), fast Fourier transform (FFT), or other spectral methods.

Where in embodiments of the present invention reference is made to the phrase "the calibration profile is stored in a memory" reference is made to retaining the computed correction function (e.g., a set of coefficients or a lookup table) within an electronic storage medium for future use in real-time correction. This may for example be done by burning calibration coefficients into non-volatile memory in a microcontroller, storing them in EEPROM, flash, or storing a lookup table in ROM.

Where in embodiments of the present invention reference is made to the phrase " applying the calibration profile", "determine an absolute angular position according to the calibration profile" or "subtracting the calibration profile from the computed first angle" reference is made to a correction operation in which the measured angle is reduced by the stored error function to yield a more accurate angle reading. This may for example be done by an embedded software routine that accesses the error function at each angular reading and performs a subtraction to produce a corrected output.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to a calibration device (300) for calibrating an angular position sensor.

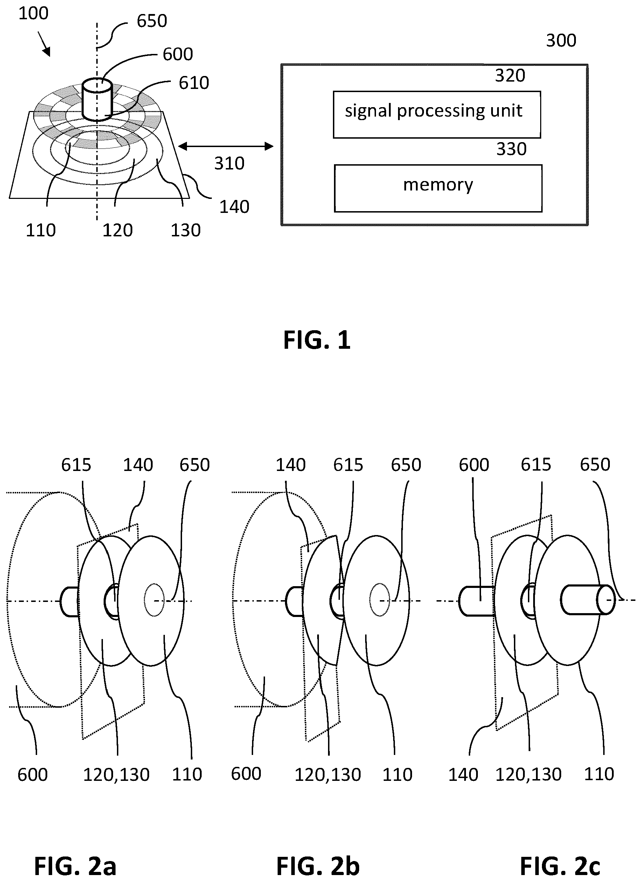

An example of such a calibration device (300) and of an angular position sensor system (100) is schematically shown in FIG. 1.

The angular position sensor has a first and a second periodic angular position encoder (120, 130). Each encoder is configured to sense an angular position of a rotatable target (110) with a different periodicity.

The calibration device (300) comprises a connecting arrangement (310) for acquiring a first periodic angle signal provided by the first periodic angular position encoder (120) and a second periodic angle signal provided by the second periodic angular position encoder (130).

The calibration device (300), moreover, comprises a signal processing unit (320) configured to compute, for each of a plurality of angular positions of the rotatable target (110), a first period-disambiguated angle using the first periodic angle signal for angular measurement, and using transitions of the first periodic signal and/or the second periodic angle signal for resolving periodic ambiguity of the first periodic angle signal.

In embodiments of the present invention the signal processing unit is configured to compute, for each of the same plurality of angular positions, a second period-disambiguated angle using the second periodic angle signal for angular measurement, and using transitions of the second periodic signal and/or the first periodic angle signal for resolving periodic ambiguity of the second periodic angle signal.

In embodiments of the present invention the signal processing unit is configured to compute, for each of the plurality of angular positions, a difference between the first and second period-disambiguated angle.

In embodiments of the present invention the signal processing unit is configured to extract a sinusoidal function having a period corresponding to one turn of the rotatable target, from the differences computed at the plurality of angular positions.

In embodiments of the present invention the signal processing unit is configured to define a calibration profile based on the extrapolated sinusoidal function.

In order to avoid the necessity to dispose of external angular references, the angle differences can be computed at a plurality of a-priory known given angular positions and/or equally spaced angular positions of the rotatable target (110), e.g. by means of external or rotatable target-related indexing mechanisms.

Alternatively, the signal processing unit can be advantageously configured to assign the first or the second (Vernier) angle at each of the plurality of angular positions (notably provided by the most precise angular encoder) where the difference between the two angles are computed in view of extracting the sinusoidal function. This approach allows an accurate extraction without additional requirements and limitations on such plurality of angular positions, such as providing predefined and/or equally spaced angular positions e.g. by an external or rotatable target-related indexing mechanism.

A schematic block diagram of an exemplary embodiment of such a position sensing system with a calibration device (300) - provisionally (temporarily) or permanently- connected to the angular position sensor device (140) is shown in FIG. 1. The acquisition can rely on a wired and/or wireless link that could optionally comprise one or more electrical connectors notably for providing a provisionally connection.

The embodiment of the FIG.1 represent a typical assembly used to measure the angular position of a rotatable object (notably a rotatable joint, or an actuator or motor's rotor) with respect to a reference (e.g. an housing, the actuator or motor's stator), wherein the rotatable target is fixed at the end portion (610) of the rotatable object (600) (e.g. on a protruding shaft of the joint, actuator, or motor) along the rotatable axis (650) of such object (e.g. rotor's axis), while the angular sensor device (140) is located in face of the rotatable target and connected to reference. Nevertheless, the invention is not limited to this illustrated assembly of the angular position sensor system, as the invention can be applied for other assemblies of the angular position sensor system, as for example illustrated in FIGS. 2a-c.

As illustrated in FIG.1, the angular position sensors system is preferably assembled according to the so called "end-of-shaft" sensor arrangement, wherein the angular position sensor device (140) having the angular position sensors (120,130) is located in face of a distal end (610) of the rotatable object (600) that axially supports the rotatable target (110). The angular position sensor device (140) is positioned so that the operational surface of the sensors (e.g. sensing surface of the sensors, e.g. provided with sensing coils, wings, photodetectors) are located in front of the operational surface of the disc-shaped rotatable target, the operational surface of the rotatable target being provided with (e.g. inductively, magnetically, or optically) detectable pattern or elements.

As illustrated in FIG. 2a, in other embodiments, the angular position sensors system can be assembled according to the so called "through-of-shaft" sensor arrangement. In such arrangement, the rotatable target is located on a distal end of an elongated portion (615) of the rotatable object (600), the elongated portion extending along the rotatable axis (650) of the rotatable element. The angular position sensors (120,130), and optionally the angular position sensor device (140), are arranged to radially surround this elongated portion (615) (such as a shaft, a cylindrical-shaped element, or a projecting feature of the rotatable element) such that the sensing surface(s) of the sensors are positioned in front of and parallel to the active surface of the disc-shaped rotatable target (110).

In other embodiments, as exemplary illustrated in FIG. 2b, the angular position sensors system can be assembled according to the so called "side-of-shaft" sensor arrangement, wherein the angular position sensors (120,130) partially surround the elongated portion (615) of the rotatable object (600).

As illustrated by way of example in FIG. 2c, the angular position sensor device may be assembled by mounting the rotatable target (100) on an internal section (rather than on the distal end) of the elongated portion (615) of the rotatable object. This configuration is particularly useful when the rotatable object does not have a free end available for attaching the rotatable target. In such arrangement, the angular position sensors can be mounted around the elongated portion (615) (as illustrated in FIG.2c), or even on a side, similarly to the arrangement of FIG. 2b.

Since the angular position sensors (120,130) and the rotatable target (110) of the system (100) are relatively moveable with respect to each other and operate mostly without physical contact, the assembly process may alter the intended operational relationship between the rotatable target and the sensors compared to the ideal configuration for which the system was originally designed.

In practice, the assembly of the system to the rotatable object is typically affected by mechanical misalignment, caused on one hand by the relatively positioning of the angular position sensor device with respect to the rotatable object, and on the other hand, by the way the rotatable target is mounted on to the rotatable object.

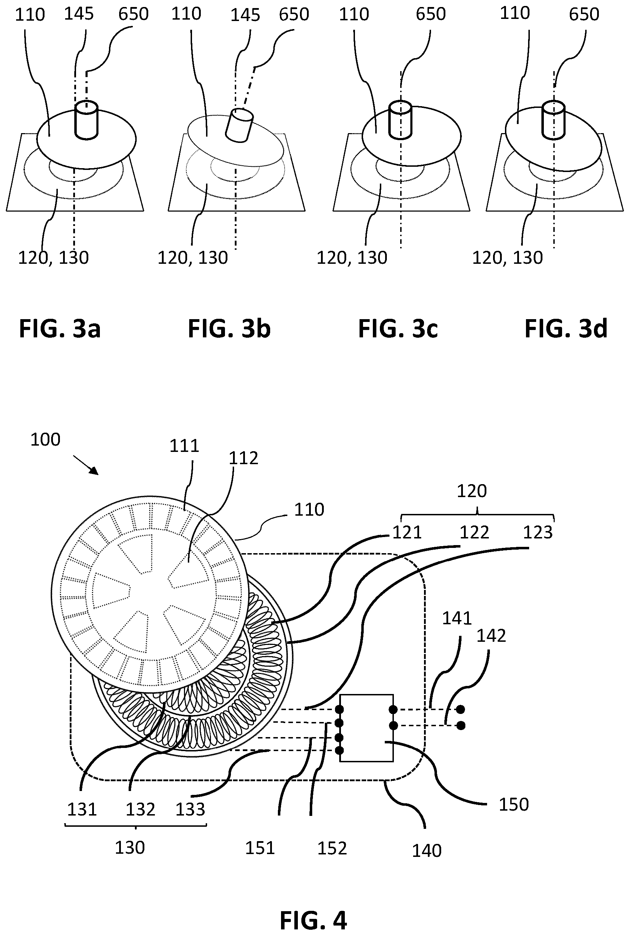

On one side, the assembly can be affected by off-axis or tilt misalignment between the sensing axis (145) of the angular position sensor device, around which the angular position sensor device is designed to operate, and the actual rotational axis (650) of the rotatable object, around which the rotatable target really rotates. Off-axis misalignment occurs when the sensing axis is laterally displaced from the rotational axis (see FIG. 3a), while tilt misalignment occurs when the sensing axis is inclined relative to the rotational axis (see FIG. 3b).

Alternatively, or more commonly in combination, the assembly may be affected by misalignments arising from the mounting of the rotatable target onto the rotatable object. For example, the center of the rotatable target may be offset from the rotational axis (650), a condition known as "wobble" misalignment" (see FIG. 3c). Additionally, the active surface of the rotatable target may be tilted (rather than perpendicular) relative to the rotational axis (650) of the rotatable object resulting in what is referred to as "skew" misalignment (see. FIG. 3d).

Errors resulting from mechanical misalignments between the sensors and the rotatable target, such as those introduced during assembly, can degrade or even compromise the accuracy of the angular position measurement. These errors are typically corrected after assembly by performing a calibration using angular reference values provided by an external device that is temporarily mounted to the rotatable object.

Such calibrations, typically performed at the customer's manufacturing or assembly site, add costs, complexity, and time to the process of bringing the angular position sensor into operation. There is therefore a need for a calibration that can compensate for assembly misalignment-induced errors without relying on external angular references.

Embodiments of the present invention relate to an angular position sensor system (100) for measuring an absolute angular position of a rotating object (600) over at least a portion of one full turn about a rotation axis of the rotating object (650).

The angular position sensor system (100) comprises:
- a rotatable target (110) fixable to a rotatable object (600);
- a first and a second periodic angular position encoder (111,112,120, 130) configured to sense an angular position (123,133) of the rotatable target, and
- a calibration device (300) of any one of the previous claims.

The angular position sensor system (100) is selectively configured to :
- operate in a calibration mode, wherein the calibration device is configured to acquire the first periodic angle signal and the second periodic angle signal so as to define a calibration profile, and to
- operate in a normal measurement mode, wherein the angular position sensor system is configured to determine an absolute angular position based on periodic angle signals and according to the defined calibration profile.

FIG. 4 shows an exemplary embodiment of an angular position sensor system (100) comprising two inductive periodic encoders. Each encoder comprises a period angular position sensor (120,130) arranged to sense a dedicated structure, referred to here as a "scale" (111, 112), which may comprise detectable patterns, elements, or materials. These scales are fixed, or intended to be fixed, to the rotatable object via a shared rotatable target (110) whose angular position is to be measured. This figure illustrates how the two periodic position sensors (120,130), each with a different periodicity are positioned relative to their corresponding scales (111,112) on the rotatable target (110).

Unlike an absolute encoder, which provides a unique angular position over the entire measurement range (e.g., one full rotation), a periodic encoder (e.g. incremental encoder) produces a cyclic signal that repeats over regular intervals. This means it can only unambiguously measure the angular position within a single period, which repeats multiple times along the full rotation of the target. To determine the absolute position, it is necessary to identify which of the repeated periods the measurement falls into.. This process, known as disambiguation, can be achieved either by counting transitions between periods or by combining the signal with that of a second period encoder having a different periodicity (i.e. angular or linear cyclic period). As illustrated in Figs. 4-6, using two sensors with different periodicities creates an unambiguous relationship between their signals over a full turn. This strategy is commonly referred to as the Vernier approach, or master-nonius approach.

The illustrated inductive angular position sensor system (100) comprises two periodic angular position encoders (120, 130) and a rotatable target (110) that carries detectable patterns representative of the angular position of the rotatable object. Each periodic angular position encoder comprises a periodic angular position sensor configured to detect angular changes by sensing structures (also referred to as "scales") (111,112) provided on the rotatable target (110) around the target center. In particular, each periodic angular position sensor comprises one or more receive coils (121, 131) and transmit coils (122,232) configured to interact with metallic patterns or elements on the target to generate angle-dependent signals.

The illustrated angular position periodic encoders (111, 112, 120, 130) are configured to operate in an axial sensing configuration, in particular according to either the end-of-shaft- or through-shaft -sensor configuration. In these configuration, the periodic angular position sensors are oriented to face the rotatable target along the rotation axis. This arrangement enables simultaneous measurement of the target's angular position using the periodic angular position sensors (120, 130) with different periodicities, which is advantageous for the Vernier calculation approach described in the invention.

The periodic angular position encoders, particularly the angular position sensors (120, 130) and the related rotatable target with detectable structures, can be configured to operate based on various sensing principles, including inductive, capacitive, magnetic, or optical sensing approaches. Each periodic angular position sensor may comprise one or more of the following components: a current or voltage-generating element, a current or voltage measuring element, an electromagnetic waves emitting element, and an electromagnetic waves sensing element. The rotatable target is equipped with one or more features - such as patterns, structures or materials - that influence of modulate the sensor signals based on electromagnetic and/or electro/magnetic influencing. In a preferred embodiment, of which an example is illustrated in FIG. 4, each of the periodic position sensors is an inductive angular position sensor comprising one or more transmit and one or more receive coils (121, 122, 131, 132). The winding pattern of the receiving coils, in combination with the patterned scale on the rotatable target, defines the spatial periodicity of the sensor signal (e.g. the period (124,134) or cycle of the angle measurement range) of the electrical quantity representing the measured angle. This periodicity determines the number of angle cycles measured per full revolution-for instance, 32 periods or 5 periods per turn.

For the sake of simplicity, any electrical or digital output provided by a position sensor that represents a measured angular position of the rotatable target is referred to as an "angle signal." For example, the receive coil patterns and scale's patterns may be designed for different numbers of periods per full turn, such as a 32-period encoder and a 5-period encoder. The winding topology, including one-fold or five-fold designs in single-phase or three-phase configurations, determines the periodic nature of the sensed signal.

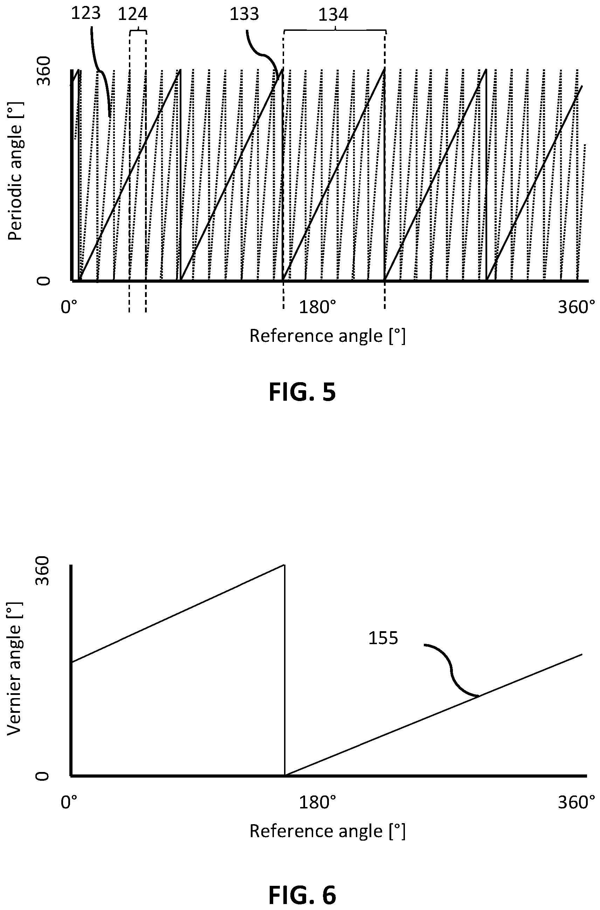

In a particularly advantageous embodiment, one of the periodic angular position encoders is configured to provide high-accuracy angular position measurement (thereafter also referred as "accurate encoder"), e.g. according to and/or for targeting particular application's requirement, while the other periodic angular position encoder (thereafter also referred as "coarse encoder") can be designed for less accurate angular position measurement as uniquely used to solve the periodic ambiguity of the accurate angle signal, e.g. a less accurate measurement. As illustrated in FIG.5, the sensor and the scale of the accurate periodic angular position encoder can be thus located in a peripheral region around the rotation axis of the encoder. This location allows for a larger sensing surface and supports a higher periodicity (i.e. more signal periods per full revolution, e.g. 32 periods over a full turn). In contrast, the sensor and the scale of the disambiguating periodic angular position encoder are positioned closer to the rotation axis where available space is more limited. This region accommodates a lower periodicity (e.g. 5 periods over a full turn), sufficient for coarse angle estimation and period disambiguation.

Various coil configurations can be used, not only for defining the periodicity but also for increase the accuracy within the period (see for example EP3885711B1). For example, certain winding patterns are designed to minimize undesired coupling between the receive and transmit coils, thereby enhancing signal integrity through common-mode rejection. In some implementations, three-phase winding configurations are used to further improve linearity by reducing harmonics and filtering error components in the received signals.

The illustrated angular position device (140) further comprises a processing unit (150) configured to collect the angle signals (123, 133) provided by the periodic angular position sensors (120, 130) so as to calculate the absolute angle signal of the target (110). The processing unit can be configured to provide t (output) the absolute angle signal to another unit of the system and/or to an external device (not illustrated), e.g. by means of a data/signal link (141), and/or by means of one or more electrical connector(s) and/or circuit(s). The angle signals and/or the absolute angle signal can be in analogue or digital form. Moreover, the angle signals and/or the absolute angle signal may consist of, or comprise, one or more component(s) representing the measured angular position of the rotatable target, such as a cos- and sin-phase components or tri-phase (i.e. 120°-phase) components.

The processing unit may be configured to operate each of the periodic angular position sensors, e.g. by one or more dedicated connection(s) (151,152), for example to control the activation of the transmit coils used in inductive sensing. The processing unit may have a further data/signal interface (142) for providing and/or collecting additional data or signal to/from another unit of the system and/or the external device.

The signal processing unit (320) receives the angle signals (123,133) from the periodic angular position sensors (120,130). The signal processing unit (320) is adapted to compute an angle from the angle signals provided by the periodic position sensors. This angle calculation can be performed by treating a first one of the angle signals from a first position sensor (120) as a primary signal and a second one of the angle signals from a second position sensor (130) as a secondary signal. Alternatively, the second one of the angle signals from the second position sensor (130) can be treated as a primary signal and the first one as a secondary signal.

As illustrated in FIG. 5, each periodic position angular encoder alone (e.g., one with 32 periods per revolution) can only provide a repeating angle signal, i.e., it cannot distinguish between periods. This is called the electrical angle, and it wraps around every 360°/N, where N is the number of periods. By combining two periodic-encoder A with N₁ periods and encoder B with N₂ periods all long the measuring range, wherein the numbers N₁ and N₂ are relatively prime (i.e. the greater common divisor of N₁ and N₂ is 1)-the processing unit (320) of the angular position system can unambiguously determine the absolute angle over the full measuring range, e.g. a full turn, by exploiting the unambiguous (i.e. unique) relationship between the two angle signals all long the measuring range as illustrated in FIG.5.

FIG.6 shows an example of an absolute angle signal (155) being unambiguously determined (calculated) from angle signals (123,124) being provided by the two periodic encoders of the angular position sensor system (100).

In other words, the processing unit (320) can unambiguously determine the absolute angle over the full measuring range by identifying in which period of the first angle signal (e.g. fine resolution angle signal) the rotatable target actually is, using the second angle signal (e.g. low-periodicity angle signal) provided by the other encoder (e.g. coarse resolution). In general, the primary signal is thus used to determine a fine angle measurement within one of its periods, while the secondary signal is used to disambiguate which period the angle belongs to. This results in a full-turn absolute angle calculation.

In case of one of the two encoders is configured as accurate encoder and the other as a coarse sensor, the angle signal (123) provided by the accurate encoder ("accurate angle signal") is advantageously used as the primary signal while the angle signal (133) of the coarse encoder ("coarse angle signal") is used as the secondary signal to disambiguate the period uncertainty of the accurate angle signal.

The illustrated signal processing unit (320) can thus determine the absolute angle signal (155) based on the unique relationship between the two angle signals all long the measuring range, e.g. the absolute angle signal can be calculated according to a formula combining the two electrical angles θ₁ and θ₂ from sensors with periodicities N₁ and N such as the following typical Vernier formula: ${θ}_{V} = mod \left(\frac{{θ}_{1} + 360 ° . mod \left(VM\times round\left(\frac{{N}_{2} ⋅ {θ}_{1} - {N}_{1} ⋅ {θ}_{2}}{360 °}\right),360°\right)}{{N}_{1}},360°\right)$ where VM is a scaling constant chosen such that it satisfies a modular inverse condition. The result is a high-resolution, full-turn absolute angle.

In this formula:
- the expression *N*₂ *· θ*₁ *- N*₁ *· θ*₂ calculates the difference between the two mechanical angles. They are put in the same scale by multiplying them with their counterpart periodicity.
- $round \left(\frac{{N}_{2} ⋅ {θ}_{1} - {N}_{1} ⋅ {θ}_{2}}{360 °}\right)$: normalizes the difference by 360 degrees and rounds it.
- the expression $360 ° . mod \left(VM\times round\left(\frac{{N}_{2} ⋅ {θ}_{1} - {N}_{1} ⋅ {θ}_{2}}{360 °}\right),360°\right)$ takes into account the coefficient of correction to find the Vernier angle. VM is the coefficient must satisfy the following condition: $mod \left(\left({N}_{1}-{N}_{2}\right).VM,{N}_{1}\right) = 1$ $VM < max \left({N}_{1}, {N}_{2}\right)$
And the final result is normalizing to keep the result into [0°,360°].
- the expression $\frac{{θ}_{1} + 360 ° . mod \left(VM\times round\left(\frac{{N}_{2} ⋅ {θ}_{1} - {N}_{1} ⋅ {θ}_{2}}{360 °}\right),360°\right)}{{N}_{1}}$ permits adding the difference of angle at the measure done by the primary target.
- the expression $mod \left(\frac{{θ}_{1} + 360 ° . mod \left(VM\times round\left(\frac{{N}_{2} ⋅ {θ}_{1} - {N}_{1} ⋅ {θ}_{2}}{360 °}\right),360°\right)}{{N}_{1}},360°\right)$ provides a normalization to keep the final angle into a mechanical period of 360 degree.

The illustrated periodic angle signals (123,124) and the related absolute angle signal (155) of Figs. 5 and 6, are ideal angle signals, i.e. angle signals devoid of any errors and/or disturbances that may arise from imperfections in the mechanical or electrical design, manufacturing variations, or assembly misalignments of the system..

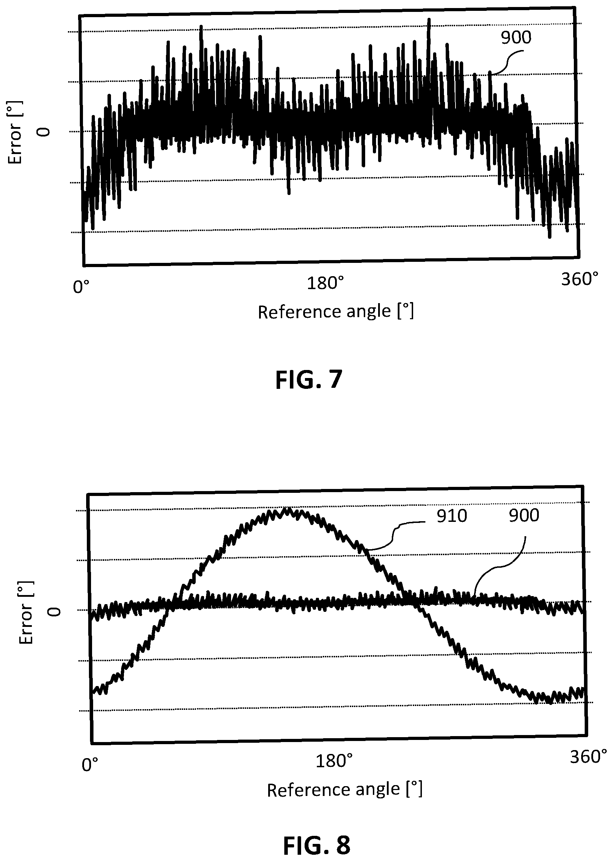

FIG. 7 shows exemplary differences, i.e. errors (900), between reference angles provided by a reference device and absolute angles (Vernier angles) resulting from angle signals provided by two period encoders (Vernier angle), in an "ideally" aligned assembly arrangement. The illustrated differences (900) primarily reflect the device's noise in function of the rotary target angle. The noise signal, quantified for example via the root mean square (RMS) of the noise, is a white-like or broad-band noise signal that determines the operational resolution of the sensor. The peak amplitude of the error on the measured angle characterizes the device's accuracy. These performance metrics are influenced by factors such as signal strength, air gap, coil imperfections, and mechanical tolerances.

As previously described, system's assemblies are typically affected by mechanical misalignment caused, one side by the relatively assembly of the angular position sensor device with respect to the rotatable object, and on the other side, by the assembly of the rotatable target on the rotatable object. These misalignments can cause additional errors (910) in angular position detection having an important impact on device's accuracy, as illustrated in FIG. 8 in comparison to device-related errors (900).

While most of the device-related errors can be compensated by calibration and/error correction processes carried out during manufacturing, errors resulting from assembly misalignments, as schematically shown in FIGS. 3a-d, typically require a calibration procedure performed after final assembly of the system with the rotatable object. This post-assembly calibration, commonly conducted at the customer's site, relies on an external reference device to provide accurate angular reference values. As previously discussed, the typical calibration procedure involves the provisional assembly of an external angular reference with the rotatable object, procedure leading the customer to invest additional cost, complexity, and time for putting the angular position sensor system into operation.

The inventor has made a first surprising observation: assembly-related misalignment errors are systematic and tend to affect both angle signals provided by the periodic angular position encoders in a repeatable manner. Furthermore, these errors can be modelled as a sinusoidal function having a period corresponding to one turn of the rotatable target/object. A second insight of the inventor is that this sinusoidal error function can be extracted without relying on an external angular reference. Instead, it can be derived solely from the difference between the two periodic angle signals, computed at same angular positions of the rotatable target.

Without being bound by theory, the inventor believes that the following mathematical model explains the second consideration and supports the effectiveness of the proposed calibration device and calibration technique. In embodiments of the present invention, each angle signal includes the true mechanical angle α_{ref} (e.g. reference angle α_{ref}), plus an error term*ε*: $α = {α}_{ref} + ε$

Supposing assembly's misalignments generate repetitive errors around the rotating angle of each angular position encoder that could be modelled by a sinusoidal function having a period corresponding to one turn around the rotating axis of the encoders, the error *ε* can be thus expressed as composed of a residual error *εᵣₑₛ* and a sinusoidal error *ζ* · *T*(*α*)*.* $ε = {ε}_{res} + ζ ⋅ T \left(α\right)$ wherein *ζ* is a weighting parameter indicating the sensitivity to misalignment coefficient of the periodic angular position encoder, and *T*(*α*) is a sinusoidal-shaped function of the angle *α* and of the various misalignment variables.

The inventor surprisingly found that the error function *T*(*α*) can be exclusively derived from the data provided by the two periodic encoders, avoiding the use of any external angle reference.

In fact, considering the following formulation of the angle signals *α*₁*, α*₂ provided by the two periodic angular position encoders: ${α}_{1} = {α}_{ref} + {ε}_{1}$ ${α}_{2} = {α}_{ref} + {ε}_{2}$ where:
- α₁ is the period-disambiguated angle signal provided by the first periodic encoder, i.e. an angle signal provided using the first periodic angular position encoder whose periodicity ambiguity has been disambiguated, e.g. by the second periodic angle signal or by another known approach based on first periodic angle signal 's transitions;
- α₂ is the periodic disambiguated signal angle provided by the second periodic angular position encoder, i.e. an angle signal provided using the second periodic angular encoder whose periodicity ambiguity has been disambiguated, e.g. by the first periodic angle signal or by another known approach based on second periodic angle signal 's transitions;
- ε₁ and ε₂ are error components, i.e. differences between measured angles and the true mechanical angle *α_{True}.*

Analogously, each of the error components *ε*₁, *ε*₂ can be rewritten as composed of a residual error *εᵣₑₛ* and a misalignment error *ζ* · *T*(*α_{ref}*): ${ε}_{1} = {ε}_{res 1} + {ζ}_{1} ⋅ T \left({α}_{ref}\right)$ ${ε}_{2} = {ε}_{res 2} + {ζ}_{2} ⋅ T \left({α}_{ref}\right.$

A delta function *Δ* of the two disambiguated angle signals can be calculated by subtracting the two disambiguated angle signals, which leads to a cancellation of the true angle *α_{True}*: $Δ = {α}_{1} - {α}_{2} = {ε}_{1} - {ε}_{2}$

The difference Δ reflects the differential error between the disambiguated angle signals of the two encoders. As *T*(*α*) is common to both error terms, it can be determined from the difference between the two angles: $Δ = \left({ε}_{res 1}+{ζ}_{1}⋅T\left({α}_{ref}\right)\right) - \left({ε}_{res 2}+{ζ}_{2}⋅T\left({α}_{ref}\right)\right)$

Finally: $Δ = \left({ε}_{res 1}-{ε}_{res 2}\right) + \left({ζ}_{1}-{ζ}_{2}\right) ⋅ T \left({α}_{ref}\right)$

As *ε*ᵣₑₛ₁ and *ε*ᵣₑₛ₂ are high frequency error components, these components can be eliminated and/or excluded by adequate signal processing techniques (these may include frequency domain analysis, e.g. based on Fourier or Wavelets transformations, or by matching/fitting the difference signal with a sinusoidal function or model having a one-turn periodicity), leaving only ,or determine, the first mechanical harmonic term (i.e. a sinusoidal function having a period corresponding to one turn of the rotatable target) due to misalignment.

Once this is done, the following equation can be obtained: $Δ \approx \left({ζ}_{1}-{ζ}_{2}\right) ⋅ T \left({α}_{ref}\right)$

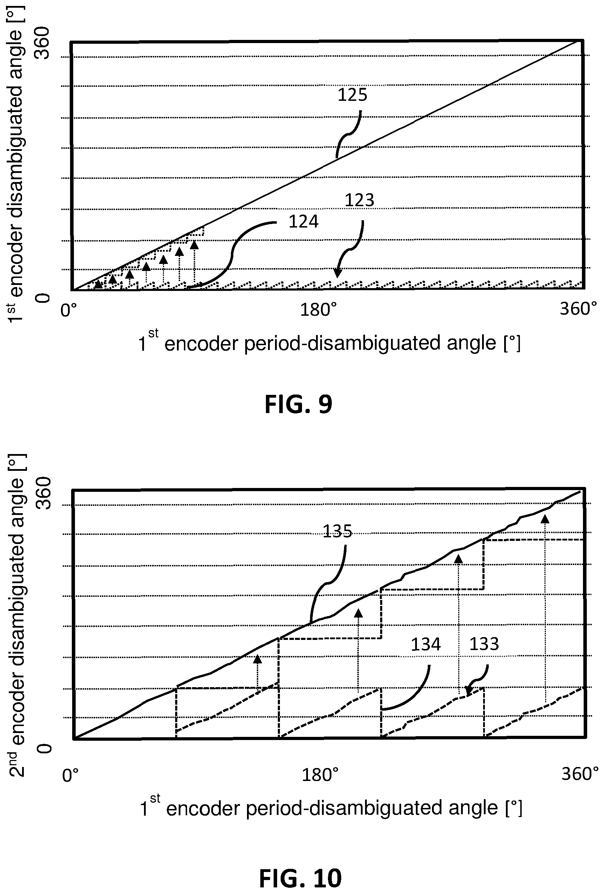

This shows that Δ contains a scaled version of the systematic error function *T*(*α_{ref}*)*,* even though the true angle *α_{ref}* itself remains unknown. As *Δ = α*₁ *- α*₂, the following approximation can be made: $T \left({α}_{ref}\right) \approx \frac{Δ}{\left({ζ}_{1}-{ζ}_{2}\right)} = \frac{{α}_{1} - {α}_{2}}{\left({ζ}_{1}-{ζ}_{2}\right)}$ The weighting parameter *ζ* depends mostly on encoder's design and it can thus be estimated or determined by measurement and/or simulations.
Moreover, the inventor noticed that, assuming that the difference between the weighting parameters *ζ*₁, *ζ*₂ is thus known and that the difference between the true angle and (one of) the disambiguated angle *α*₁*, α*₂ is small enough in view of inferring the sinusoidal error function, i.e. $T \left({α}_{1}\right) \approx T \left({α}_{ref}\right)$ the error function *T*(*α*) can thus be unambiguously derived (e.g. isolated, extracted or inferred) from the difference *Δ* of the disambiguated signal angles *α*₁*, α*₂ without requiring the true angle *α_{ref},* i.e. an external angular reference *α_{ref},* i.e.: $T \left({α}_{1}\right) \approx \frac{{α}_{1} - {α}_{2}}{\left({ζ}_{1}-{ζ}_{2}\right)} = const \left({α}_{1}-{α}_{2}\right)$ as graphically illustrated in FIGS. 9-10.

According to these considerations, the angular position system (100) of the FIG. 4 can be calibrated for correcting system assembly's misalignments by means of the calibration device (300) schematically illustrated in FIG.1.

The calibration device (300) comprises a connecting arrangement (310) for acquiring the first periodic angle signal (123) provided by the first periodic angular position encoder (111,120), and typically generated by the first periodic position sensor (120), and the second periodic angle signal (133) provided by the second periodic angular position encoder (112,130), and typically generated by the second periodic position sensor (130).

The connecting arrangement (310) may comprise, or consist of, a data/signal link (310), that is - wirelessly- and/or by wire- connectable or connected to the angular position encoders, directly or indirectly e.g. via the processing unit 150 or other circuits, e.g. for acquiring such angle signals for calibration.

In some embodiments, particularly where the calibration device is a detachable and/or standalone calibration device, the connecting arrangement (310) can comprise or consist in a data/signal link (310), that is - wirelessly- and/or by wire- provisionally or permanently-connectable to the angular position encoders, directly or indirectly e.g. via the processing unit 150 or other circuits, e.g. for providing a provisional connection lasting the duration of the calibration process. Particularly, the connecting arrangement can comprise one or more electrical connectors and circuits to acquire the angle signals and to provide such acquired angle signals to the signal processing unit for computation.

Alternatively, particularly where the calibration device is a permanently element of the angular position sensor system (100), the connecting arrangement (310) can be part of the circuits of the angular position sensor device, eventually of the processing unit (150).

The calibration device (330) further comprises a signal processing unit (320) for processing the acquired angle signals so as to define a calibration profile, that can comprise, or consist of, calibration parameters or calibration dataset, to be used to correct misalignments-induced errors affecting the measured angles when the angular position system (100) operates in normal measurement mode. In case of an in-system integrated calibration device, the signal processing unit can consist in, or be part of, the processing unit (150) of the angular position device (140). In particular, the processing unit may comprise a programmable processing unit, i.e. a processing unit configured to execute instructions located in a memory (330) of the processing unit and/or of the calibration device (330).

In particular, the signal processing unit (320) of the calibration device is configured to executed a calibration according to the above described inventor's considerations.

The signal processing unit (320) can thus be configured to compute, for each of a plurality of angular positions of the rotatable target (110):
- a first angle (thereafter also referred as first period-disambiguated angle or "first disambiguated angle") (cf. α₁) using the first periodic angle signal for angular measurement and the second periodic angle signal for resolving periodic ambiguity of the first periodic angle signal; and
- a second angle (thereafter also referred as "second period-disambiguated angle" or "second disambiguated angle") (cf. *α*₂) using the second periodic angle signal for angular measurement and the first periodic angle signal for resolving periodic ambiguity of the second periodic angle signal.

FIGS. 9 and 10 graphically illustrate a computation of two periodic-disambiguated angle signals, the first one based on the angle signal provided by the first periodic encoder, the second one based on the angle signal provided by the second periodic encoder, both plotted according to the first periodic-disambiguated angle signal used as Vernier angle.

As graphically represented in FIG. 9, the first angle signal (125) can be computed using the first periodic angle signal (123) provided by the first period encoder, whose periodic ambiguity has been disambiguated using, preferably the second periodic angle signal (133) provided by the second periodic encoder, alternatively or complementarily, taking into account (e.g. counting/cumulating) periodic transitions (124) of the first periodic angle signal representing a transition from one electrical period to another one, as well known in the technical domain. As in this embodiment of FIGS.9 and 10 the first periodic-disambiguated angle has been used as internal angle reference (at the place of the external angular reference), the illustration of the first periodic angle signal (125) is shaped as an ideal line.

Similarly, as illustrated inf FIG.10, the second periodic angle signal (133) provided by the first period encoder, whose periodic ambiguity has been disambiguated using, preferably the first periodic angle signal (123) provided by the second periodic encoder, alternatively or complementarily, taking into account (e.g. counting/cumulating) periodic transitions (134) of the second periodic angle signal representing a transition from one electrical period to another one. As the second periodic angle signal is plotted in the FIG. 10 according the internal reference being first periodic angle signal, at the contrary of the FIG.9, the plotted second periodic angle signal shows differences that have been emphasized in the FIG.10 for sake of illustration.

Even if the angle signals 123, 125, 133, 135 have been illustrated as continuous signal for sake of illustration and simplicity, the first and the second periodic-disambiguated angle signals are typically computed for a limited number of discrete positions, that could be even grouped in a sub-portion of a full turn.

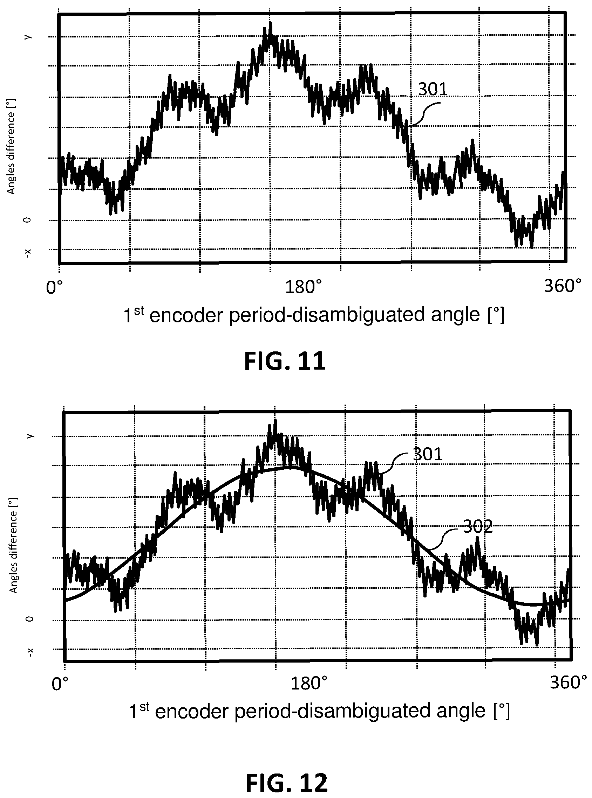

Then, for each of this plurality of angular positions, the signal processing unit (320) can thus compute a difference (cf. *Δ*) (301) between the first and second absolute angle, as exemplarily illustrated in FIG. 11, so as to extract (e.g. determine, infer) a sinusoidal function (302) having a period corresponding to one turn of the rotatable target from said difference, as exemplarily illustrated in FIG. 12.

Based on said sinusoidal function, the signal processing unit can determine a calibration profile, that can comprise and or consist in calibration parameter or dataset, for being used for providing accurate angular measurement.

In other words, at a plurality of angular positions of the rotatable target (110), the signal processing unit (320) determines a difference between the first and second Vernier angles. From these differences, it extracts a sinusoidal curve based on the first mechanical harmonic component of the differences.

It is an advantage of embodiments of the present invention that the extracted curve represents a misalignment-induced error, such as those caused by off-axis placement, tilt, wobble, or skew. These errors may for example arise due to mechanical tolerances during assembly. As above described and illustrated in FIGS. 3a-d, Off-axis misalignment occurs when the sensor and target axes do not perfectly align. Tilt misalignment occurs when the sensor and target planes are not parallel. Wobble represents a rotational instability of the target (110) during rotation. Skew represents an angular displacement between the sensor and target. These misalignments contribute to measurement errors that repeat either every electrical period (for tilt and off-axis) or every mechanical period (for wobble and skew). It is an advantage of embodiments of the present invention that these errors can be significantly reduced or even eliminated.

The calibration profile derived from the extracted curve is applied to correct the absolute angular position measurement during normal operation. In one embodiment, the correction is applied to the absolute angular position measurement provided by the angular position device (140) or system (100), the correction being applied by the system or eventually by the calibration device (300) or another external device (not illustrated). The absolute angular position measurement during normal operation is preferably done by computing an absolute angle using an angle signal from the first position sensor and using an angle signal from the second position sensor (e.g. a Vernier angle may be calculated for obtaining the absolute angular position).

In embodiments of the present invention the signal processing unit then performs a harmonic analysis (e.g., via discrete Fourier or wavelet transform) of the difference signal Δ over one full mechanical turn (0°-360°), for extracting the first mechanical harmonic component. This component captures the dominant contribution of misalignment-induced error. Alternatively or complementarily, particularly in case the period position encoders are designed to operate on a sub-portion of the full turn (e.g. the unambiguous measurement range of the encoders is smaller than one turn, i.e. 360 degrees) and/or in case the plurality of angular positions -where the differences between the angles are computed- are located uniquely in a sub-portion of a full turn, the signal processing unit performs a fitting and/or a matching of the difference signal Δ with one of a plurality (i.e. set) of predefined different sinusoidal functions or models so as to determine the most promising sinusoidal function or model according to a given criteria, notably the residual errors.

In embodiments of the present invention the curve is derived from the first mechanical harmonic component and/or from the most promising sinusoidal function or model.

During normal operation an absolute angular position measurement is computed from the angle signals of the first and second position sensor (e.g. a Vernier angle is calculated) and the calibration profile is applied as a correction to the angle obtained from the absolute angular position measurement (typically α₁, the one from the higher-resolution sensor).

This enables precise angle measurement even in the presence of mechanical tolerances, without requiring any external angular reference during calibration.

In embodiments of the present invention, the signal processing unit (320) may be configured to extract the calibration profile by performing a harmonic analysis of the differences between the first and second angles. This enables accurate extraction of the error pattern caused by mechanical misalignment.

In embodiments of the present invention, the harmonic analysis may comprise determining a first harmonic component over 360 degrees using a Fourier transform. This provides an efficient computational method for isolating the relevant error components.

FIG. 11 shows the difference between two Vernier angles (disambiguated angles) across a full turn. This difference (301), calculated at multiple angular positions, reveals systematic errors related to mechanical misalignments. The graph shows how the angle differences contain both high-frequency components related to offset errors and a sinusoidal curve (a first mechanical harmonic component) related to misalignment. This data is advantageous for extracting the calibration profile (240) used to correct the angular position measurement.

This is further illustrated in FIG. 12. It shows the difference between two Vernier angles across a full turn and the extracted delta along with its first mechanical harmonic component. Fourier or Wavelet analysis can be applied to isolate the first mechanical harmonic from the difference between the two Vernier angles, and/or sinusoidal curve or model fitting and/or matching. This sinusoidal curve (harmonic component) represents the systematic error due to misalignment that can be compensated through linearization. The extraction process removes high-frequency error components, focusing solely on the misalignment-related error that follows a sinusoidal pattern over a full mechanical rotation.

As exemplarily illustrated in FIGS. 9-12, the signal processing unit can be advantageously configured to assign the first or the second period-disambiguated angle (Vernier angle) at each of the plurality of angular positions (particularly the most precise absolute angle) where the difference between the two absolute angles are computed in view of extracting the sinusoidal function. This embodiment allows an accurate extraction without additional requirements on such plurality of angular positions, for example, such as computing the differences at equally spaced angular positions or at (a-priory) known angular positions e.g. being defined by an external or rotatable target-related indexing mechanism.

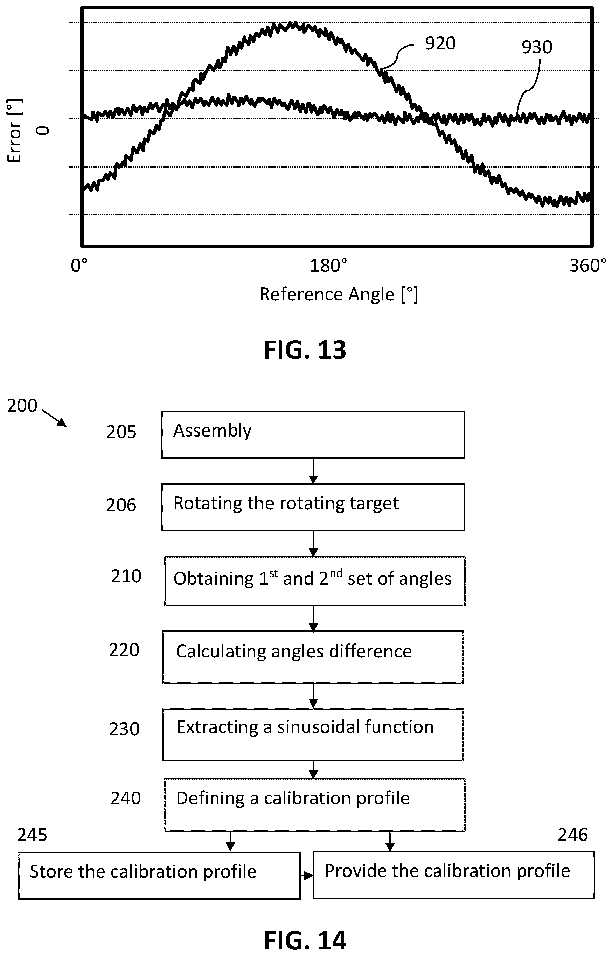

FIG. 13 shows an example of a system being calibrated according to the invention. The Error curve (920) represents the error provided by an uncalibrated angle measurement system affected by assembly misalignment while the error curve (930) exemplarily represents the angle measurement error after applying the calibration profile obtained using a device or method in accordance with embodiments of the present invention. It demonstrates the effectiveness of the calibration method in improving measurement accuracy. The original measurement contains errors due to mechanical misalignments, while the corrected measurement exhibits substantially reduced error after applying the calibration profile (e.g. linearization curve) derived from the first mechanical harmonic component. This correction is achieved without requiring an external angle reference, making it valuable for practical applications where reference-free calibration is advantageous.

In embodiments of the present invention the calibration profile (eventually the extracted sinusoidal function, e.g. curve or parameters) may be stored in a memory and applied during operation to correct the measured angular position. This allows for persistent calibration that remains available after power cycles.

The calibration profile can comprise one or more calibration parameter(s) such as: an amplitude, an offset, a phase of the sinusoidal curve being determined, an index identifying the most prominent sinusoidal curve or model of the set being fitted and/or matched with the angle signal differences. Alternatively or complementarily, the calibration profile can comprise one or more calibration dataset, such as discrete points representing the sinusoidal curve at given angles of the rotatable target, discrete points being eventually used to interpolate the curve so as to provide calibration data at other angles.

In embodiments of the present invention the signal processing unit (320) may apply the correction by subtracting the curve data from the computed first angle. This straightforward implementation reduces computational complexity. The invention is not limited to subtracting the curve data for applying the correction. Also other compensation techniques on the computed first angle using the calibration pattern, in form of calibration parameters and/or dataset, may be applied.

In embodiments of the present invention the first periodic position sensor (120) may have a higher number of periods per turn than the second periodic position sensor (130), and is used as the primary sensor during normal operation. This configuration maximizes the achievable resolution of the device (100).

In embodiments of the present invention the periodic position sensors (120, 130) may be inductive sensors.

In embodiments of the present invention the periodic position sensors (120, 130) and the signal processing unit (320) may be integrated in a single semiconductor package. This reduces system size and improves reliability by eliminating external connections.

In embodiments of the present invention the rotatable target (110) may comprise a conductive or ferromagnetic structure configured to modulate the signals received by the periodic position sensors (120, 130).

In embodiments of the present invention at least one of the periodic position sensors (120, 130) may comprise a transmit coil configured to generate an excitation field and at least one receive coil having a winding pattern that defines a periodic spatial response corresponding to the periodicity of the angle signal. This configuration optimizes signal strength and measurement sensitivity.

Even though the FIGS. 1 to 4 illustrate a preferred arrangement wherein the target comprises a single surface whose angular position is detectable by the angular position sensing device, and wherein both periodic position encoders are coplanar and located on the same surface (e.g. PCB), the above described inventor's considerations also apply - at least partially and potentially fully- to alternative configurations.

In particular, the inventor's considerations remain applicable to configurations in which the rotating target comprises a plurality of connected surfaces (e.g. a dual-surface target, or a multi-disc target) each of which contributes to the angular measurement as detected by the position sensor device.

Alternatively or in combination, the considerations also applyto angular position sensor devices comprising non-coplanar periodic position encoders. For example, the encoders may be arranged on two parallel planes, such as two stacked or spaced-apart printed circuit boards (PCBs).

The extent to which the inventor's considerations apply in such alternative configurations depends on the ability of these configurations to induce mechanical misalignment errors that similarly affect the readings of both periodic position encoders.

In a second aspect, the present invention relates to a method for calibrating an angular position sensor. The angular position sensor comprising at least a first and a second periodic angular position encoder (111, 112, 120, 130) configured to sense an angular position of a same rotatable target with different periodicities.

The method comprises:
- assembling (205) the rotatable target (110) to a rotatable object (600) whose angular position has to be measured;
- obtaining (210), for each of a plurality of angular positions of the rotatable target (110), a first period-disambiguated angle signal (125) by combining a first angle signal (123) from the first periodic angular position encoder and a second angle signal (133) from the second angular periodic position encoder, wherein the first angle signal is used for angular measurement, and wherein transitions (124) of the first periodic signal and/or the second angle signal is used for resolving periodic ambiguity of the first angle signal;
- obtaining (210), for each of the same plurality of angular positions, a second period-disambiguated angle signal (135) by using the second angle signal for angular measurement, and using transitions (134) of the second periodic signal and/or the first angle signal for resolving periodic ambiguity of the second angle signal;
- computing (220), for each of the plurality of angular positions, a difference (301) between the first and second period-disambiguated angle;
- from the differences (301) computed at the plurality of angular positions, extracting (230) a sinusoidal function (302) having a period corresponding to one turn of the rotatable target;
- defining (240) a calibration profile based on the extrapolated sinusoidal function (302), preferably the calibration profile comprising a calibration parameter and/or calibration dataset.

As illustrated in FIG. 14, a flow chart provides an exemplary overview of the key and optional steps in a calibration method for a position sensing system (200), in accordance with embodiments of the present invention. The method includes, after the sensor system has been assembled on the rotatable object whose angular position should be measured (205), obtaining a first set of angles (210) by treating a first periodic position sensor (120) as primary and a second as secondary, obtaining a second set of angles (220) by treating the second sensor (130) as primary and the first as secondary. In other words, for each of a plurality of angular positions of the rotatable target:
- obtaining (210) a first disambiguated angle signal wherein the first angle signal is used for angular measurement and the second angle signal is used for resolving periodic ambiguity of the first angle signal; and
- obtaining (210), for each of the same plurality of angular positions, a second disambiguated angle signal by using the second angle signal for angular measurement and the first angle signal for resolving periodic ambiguity of the second angle signal.

The plurality of angular positions of the rotatable target can be provided by rotating the rotatable target (206), directly or indirectly by rotating the rotating object on which the rotatable target is fixed (assembled).

In embodiments of the present invention the method then comprises calculating (computing) the differences (220) between the first and second obtained angles. In this step, for each of this plurality of angular positions of the rotatable target, a difference (301) between the first and second disambiguated angle is computed in view of extracting the sinusoidal function (302) having a period corresponding to one turn of the rotatable target, as illustrated in FIG.12, the sinusoidal function reflecting errors caused by assembly's misalignments as above described.

In embodiments of the present invention the method comprises extracting (computing) a sinusoidal function , e.g. derived from the first mechanical harmonic component of the differences, in view of defining (240) a calibration profile to be applied (used) to angular measurement, particularly to correct the absolute angular position measurement during normal operation. The definition of the calibration profile may comprise weighting the extrapolated sinusoidal function using a weighting parameter, of the value of which may depend on the design of the angular position encoders, and may be determined through simulation and/or empirical observation.

In embodiments of the present invention, extracting (240) the sinusoidal function (302) may comprise performing a harmonic analysis of the differences (230) between the first and second angles (210, 220). This enables efficient isolation of the systematic error components.

In embodiments of the present invention, the harmonic analysis may comprise determining the first mechanical harmonic component over a full turn using a Fourier or Wavelet transform. In embodiments of the present invention a sinusoidal function may be fitted or matched to the observed differences.

In embodiments of the present invention, extracting (240) the sinusoidal function ( 302) may comprise assigning, at each of the plurality of angular positions, the first or the second absolute angle signals being obtained at said angular position

The method may comprise a step of storing (245) the determined calibration profile, preferably in form of one or more calibration (function) parameters and/or calibration dataset (calibration value at given angular positions calculated by the angular position sensor system) as previously described, in a memory of the position sensing system and/or of an external device connectable to the position sensing system. The one or more calibration parameters can comprise function parameters mathematically defining the extrapolated sinusoidal function, such as amplitude, angular phase and/or offset of the sinusoidal function. Calibration dataset can comprise a series of discrete calibration values being determined at given angular positions of the rotatably target of the angular position sensor system.

The method may comprise a step of providing (246) the defined calibration profile, to the angular position sensor system, the angular position sensor device and/or to an external device being connectable to the angular position sensor device and/or system.

In embodiments of the present invention, applying the calibration profile (240) may comprise correcting the angle signals provided by the first and/or second periodic encoder, or an absolute angle signal derived from said angle signals, during normal operation to obtain a corrected absolute angular position (i.e. a more accurate absolute angular position). This simple mathematical operation can be efficiently implemented in low-cost processors.

In embodiments of the present invention, the periodicities of the first and second periodic position sensors (120, 130) have no common divisor. This condition maximizes the range over which unambiguous absolute position can be determined through the Vernier principle.

In some embodiments, the calibration method comprises a connection of a calibration device to the angular position sensor device, wherein the steps of obtaining the first and the second periodic-disambiguated angle signal, computing the differences between such signals and extracting the sinusoidal function are executed by a signal processing unit of the calibration device, as above described. The method can further comprise a disconnection of the calibration device (notably of the connecting arrangement thereof) from the angular position sensor device after the step of storing and/or providing the calibration profile. In some embodiments, the connection and/or disconnection can be an operational connection and/or disconnection of the connecting arrangement of the calibration device, e.g. in case of a calibration device being wireless connected to the system. In other embodiments, the connection and/or disconnection can be - alternatively or complementarily- a physical connection and/or disconnection of the connecting arrangement, e.g. in case of a removably calibration device to be used for calibration process only.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A calibration device (300) for calibrating an angular position sensor device (140) having a first and a second periodic angular position encoder (111,112,120, 130) each configured to sense an angular position (123,133) of a rotatable target (110) with a different periodicity (124,134), the calibration device comprising :
- a connecting arrangement (310) for acquiring a first periodic angle signal (123) provided by the first periodic angular position encoder (111,120) and a second periodic angle signal (133) provided by the second periodic angular position encoder (112,130); and
- a signal processing unit (320) configured to
- compute, for each of a plurality of angular positions of the rotatable target (110), a first period-disambiguated angle (125) using the first periodic angle signal (123) for angular measurement, and using transitions (124) of the first periodic signal and/or the second periodic angle signal (133) for resolving periodic ambiguity of the first periodic angle signal;
- compute, for each of the same plurality of angular positions, a second period-disambiguated angle (135) using the second periodic angle signal for angular measurement, and using transitions (134) of the second periodic signal and/or the first periodic angle signal for resolving periodic ambiguity of the second periodic angle signal;
- compute, for each of the plurality of angular positions, a difference (230) between the first and second period-disambiguated angle (125, 135);
- from the differences (230) computed at the plurality of angular positions, extract a sinusoidal function (302) having a period corresponding to one turn of the rotatable target;
- define a calibration profile based on the extrapolated sinusoidal function (302).

2. The calibration device of claim 1, wherein the signal processing unit (320) is configured to use, at each of the plurality of angular positions, either the first or the second period-disambiguated angle to represent the angular position in extracting the sinusoidal function.

3. The calibration device of claim 1 or 2, wherein the signal processing unit (320) is configured to extract the sinusoidal function by:
- performing a harmonic analysis of the differences between the first and second period-disambiguated angles, wherein the harmonic analysis preferably comprises determining a first harmonic component over 360 degrees using a Fourier transform or a wavelet transform; and/or fitting and/or matching the differences with a given sinusoidal functions or models, preferably by fitting and/or matching the differences with one of a plurality of predefined different sinusoidal functions or models.

4. The calibration device of any one of the previous claims, wherein the signal processing unit (320) is configured to weight the extrapolated sinusoidal function by a weighting parameter for defining the calibration profile.

5. The calibration device of any one of the previous claims, wherein the signal processing unit (320)is configured to :
- store the calibration profile, preferably in form of one or more calibration function parameters and/or calibration dataset, in a memory (330) of the calibration device; and/or to
- provide the defined calibration profile, preferably in form of one or more calibration parameters and/or calibration dataset, to the angular position system and/or to a device being connectable to the angular position sensor device; the calibration device being preferably configured to be provisionally connectable to the angular position sensor device for calibration.

6. An angular position sensor system (100) for measuring an absolute angular position of a rotating object (600) over at least a portion of one full turn about a rotation axis of the rotating object (650), comprising :
- a rotatable target (110) fixable to a rotatable object (600);
- an angular position sensor device (140) having a first and a second periodic angular position encoder (111,112,120, 130) configured to sense an angular position (123,133) of the rotatable target, and
- a calibration device (300) of any one of the previous claims;
wherein the angular position sensor system is selectively configured to :
- operate in a calibration mode, wherein the calibration device is configured to acquire the first periodic angle signal and the second periodic angle signal so as to define a calibration profile, and to
- operate in a normal measurement mode, wherein the angular position sensor system is configured to determine an absolute angular position based on periodic angle signals and according to the defined calibration profile.

7. The angular position sensor system (100) of the previous claim, configured, in the normal measurement mode, to correct : said periodic angle signals and/or an angle calculated from said periodic angle signals, according to the defined calibration profile.

8. The position sensor system of the claim 6 or 7, wherein the rotatable target (110) is fixed to an end (610), or around an elongated portion (615), of the rotatable object (600); and/or wherein the first and the second periodic position encoders (111,112,120, 130) are optical, magnetic, inductive, and/or capacitive periodic angular position encoders.

9. A method (200) for calibrating an angular position sensor device (140) , the angular position sensor device comprising at least a first and a second periodic angular position encoder (111, 112, 120, 130) configured to sense an angular position of a same rotatable target with different periodicities, the method comprising:
- assembling (205) the rotatable target (110) to a rotatable object (600) whose angular position has to be measured;
- obtaining (210), for each of a plurality of angular positions of the rotatable target (110), a first period-disambiguated angle signal (125) by combining a first angle signal (123) from the first periodic angular position encoder and a second angle signal (133) from the second angular periodic position encoder, wherein the first angle signal is used for angular measurement, and wherein transitions (124) of the first periodic signal and/or the second angle signal is used for resolving periodic ambiguity of the first angle signal;
- obtaining (210), for each of the same plurality of angular positions, a second period-disambiguated angle signal (135) by using the second angle signal for angular measurement, and using transitions (134) of the second periodic signal and/or the first angle signal for resolving periodic ambiguity of the second angle signal;
- computing (220), for each of the plurality of angular positions, a difference (301) between the first and second period-disambiguated angle;
- from the differences (301) computed at the plurality of angular positions, extracting (230) a sinusoidal function (302) having a period corresponding to one turn of the rotatable target;
- defining (240) a calibration profile based on the extrapolated sinusoidal function (302), preferably the calibration profile comprising a calibration parameter and/or calibration dataset.

10. The method of the previous claim, wherein said step of assembling comprising:
- mounting the rotatable target at an end, or around an elongated portion, of the rotatable object, and
- mounting of periodic angular position sensors of the first and the second encoders in front of one or more scales of the first and the second encoders, said one or more scales being provided on the rotatable target, so as to sense an angular position of the rotatable target.

11. The method of claim 9 or 10, wherein extracting (230) the sinusoidal function (302) comprises:
- performing a harmonic analysis of the differences between the first and second period-disambiguated angle signals, preferably the harmonic analysis comprising determining the first mechanical harmonic component over a full turn using a Fourier transform or a Wavelet transformation; and/or
- fitting and/or matching the differences with a given sinusoidal function or model, preferably by fitting and/or matching the differences with one of a plurality of predefined different sinusoidal functions or models.

12. The method of any one of the claims 9 to 11, wherein extracting (230) the sinusoidal function (302) comprises assigning, at each of the plurality of angular positions, either the first or the second period-disambiguated angle signals to represent the angular position used in the extraction of the sinusoidal function.

13. The method of any one of the claims 9 to 12, wherein defining a calibration profile comprises weighting the extrapolated sinusoidal function by a weighting parameter.

14. The method of any one of the claims 9 to 13, wherein said step of obtaining a first and a second period-disambiguated angle comprises:
- rotating (206) the rotatable object from an initial angular position to a final angular position; preferably the rotatable object being rotated over a full turn.

15. The method of any one of the claims 9 to 14, further comprising :
- storing (245) the calibration profile, preferably in form of one or more calibration function parameters and/or calibration dataset, in a memory of the angular position sensor device and/or of an external device connectable to the position sensor device; and/or
- providing (246) the defined calibration profile, preferably in form of one or more calibration parameters and/or calibration dataset, to the angular position sensor device and/or to an external device being connectable to the angular position sensor device.
